# FASCICULE DE BREVET EUROPEEN

(11) **EP 2 512 834 B1**
(45) Date de publication et mention de la délivrance du brevet: **19.08.2015**
(21) Numéro de dépôt: 10794933.1
(22) Date de dépôt: 07.12.2010
(51) Int. Cl.: B60C 15/06

(54) **BOURRELET DE PNEUMATIQUE POUR VEHICULE LOURD DE TYPE GENIE CIVIL**
REIFENWULST FÜR EIN SCHWERES BAUFAHRZEUG
TIRE BEAD FOR HEAVY CIVIL ENGINEERING VEHICLE

(30) Priorité: 15.12.2009 FR 0958993
(43) Date de publication de la demande: 24.10.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BONDU, Lucien, F-63800 La Roche Noire (FR)
(74) Mandataire: Le Cam, Stéphane Georges Elie
(86) Numéro de dépôt international: PCT/EP2010/069080
(87) Numéro de publication internationale: WO 2011/073058

(56) Documents cités:
- FR-A1- 2 901 178
- FR-A1- 2 928 104
- GB-A- 2 276 357

## Description

La présente invention concerne un pneumatique radial destiné à équiper un véhicule lourd de type génie civil.

Bien que non limitée à ce type d'application, l'invention sera plus particulièrement décrite en référence à un pneumatique radial destiné à être monté sur un dumper, véhicule de transport de matériaux extraits de carrières ou de mines de surface. Le diamètre nominal de la jante d'un tel pneumatique, au sens de la norme European Tyre and Rim Technical Organisation ou ETRTO, est égal au minimum à 25".

Dans ce qui suit, on désigne par:
- « Plan méridien »: un plan contenant l'axe de rotation du pneumatique.
- « Plan équatorial »: le plan passant par le milieu de la surface de roulement du pneumatique et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur »: dont la distance radiale est inférieure, respectivement supérieure.
- « Axialement intérieur, respectivement axialement extérieur»: dont la distance axiale est inférieure, respectivement supérieure.

Un pneumatique comprend une bande de roulement destinée à venir en contact avec le sol, deux flancs s'étendant radialement vers l'intérieur depuis les extrémités de la bande de roulement, et deux bourrelets prolongeant les flancs radialement vers l'intérieur et assurant la liaison mécanique entre le pneumatique et la jante sur laquelle il est monté.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial pour véhicule lourd de type génie civil comprend habituellement au moins une couche d'armature de carcasse constituée d'éléments de renforcement métalliques enrobés d'un matériau polymérique d'enrobage. Les éléments de renforcement métalliques de la couche d'armature de carcasse sont sensiblement parallèles entre eux et ont une direction sensiblement radiale, c'est-à-dire qu'ils font, avec la direction circonférentielle, un angle compris entre 85° et 95°.

La couche d'armature de carcasse comprend une partie principale d'armature de carcasse, reliant les deux bourrelets entre eux et s'enroulant dans chaque bourrelet, de l'intérieur vers l'extérieur du pneumatique, autour d'un noyau tringle, pour former un retournement d'armature de carcasse s'étendant radialement vers l'extérieur jusqu'à une extrémité de retournement d'armature de carcasse et comprenant deux faces respectivement axialement intérieure et axialement extérieure de retournement d'armature de carcasse.

Le noyau tringle est généralement constitué d'un élément de renforcement circonférentiel le plus souvent métallique entouré d'au moins un matériau, de manière non exhaustive, polymérique ou textile. L'enroulement de la couche d'armature de carcasse autour du noyau tringle, de l'intérieur vers l'extérieur du pneumatique, et formant un retournement d'armature de carcasse s'étendant radialement vers l'extérieur, permet l'ancrage de la couche d'armature de carcasse au noyau tringle du bourrelet.

Le positionnement radial de l'extrémité de retournement d'armature de carcasse est caractérisé par la hauteur de retournement d'armature de carcasse qui est la distance radiale entre l'extrémité de retournement d'armature de carcasse et le point le plus radialement intérieur du noyau tringle. La hauteur de retournement d'armature de carcasse conditionne l'ancrage du retournement d'armature de carcasse dans les mélanges polymériques en contact respectivement avec les faces axialement intérieure et extérieure de retournement d'armature de carcasse. La hauteur de retournement d'armature de carcasse peut être définie à l'aide d'un ratio par rapport à la distance radiale entre le point le plus radialement extérieur de la bande de roulement et le point le plus radialement intérieur du bourrelet.

Par face axialement intérieure de retournement d'armature de carcasse, on entend la face de retournement d'armature de carcasse dont la normale extérieure en tout point de ladite face a une composante axiale dirigée vers l'intérieur du pneumatique. Par face axialement extérieure de retournement d'armature de carcasse, on entend la face de retournement d'armature de carcasse dont la normale extérieure en tout point de ladite face a une composante axiale dirigée vers l'extérieur du pneumatique.

La face axialement intérieure de retournement d'armature de carcasse est en contact avec un élément de remplissage prolongeant radialement vers l'extérieur le noyau tringle. L'élément de remplissage a, dans tout plan méridien, une section sensiblement triangulaire et est constitué d'au moins un matériau polymérique de remplissage. L'élément de remplissage peut être constitué d'un empilage dans le sens radial d'au moins deux matériaux polymériques de remplissage en contact suivant une surface de contact coupant tout plan méridien selon une trace méridienne. L'élément de remplissage sépare axialement la partie principale d'armature de carcasse et le retournement d'armature de carcasse.

La face axialement extérieure de retournement d'armature de carcasse est au moins en partie en contact avec un élément de bourrage constitué d'un matériau polymérique de bourrage. L'élément de bourrage est axialement intérieur au flanc et à un élément de protection prolongeant radialement vers l'intérieur le flanc, le flanc et l'élément de protection étant respectivement constitués d'un mélange polymérique de flanc et d'au moins un mélange polymérique de protection.

Un matériau polymérique, après cuisson, est caractérisé mécaniquement par des caractéristiques de contrainte-déformation en traction, déterminées par des essais de traction. Ces essais de traction sont effectués par l'homme du métier, sur une éprouvette, selon une méthode connue, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange polymériques, exprimé en méga pascals (MPa), la contrainte de traction mesurée pour un allongement de 10% de l'éprouvette.

Un matériau polymérique, après cuisson, est également caractérisé mécaniquement par sa dureté. La dureté est notamment définie par la dureté Shore A déterminée conformément à la norme ASTM D 2240-86.

Au cours du roulage du véhicule, le pneumatique, monté sur sa jante, gonflé et écrasé sous la charge du véhicule, est soumis à des cycles de flexion, en particulier au niveau de ses bourrelets et de ses flancs.

Les cycles de flexion entraînent des variations de courbure combinées avec des variations de tension des éléments de renforcement métalliques de la partie principale d'armature de carcasse et du retournement d'armature de carcasse.

Pour un pneumatique à retournement d'armature de carcasse dit haut, c'est-à-dire pour lequel la hauteur d'armature de carcasse est au moins égale à 0.3 fois la distance radiale entre le point le plus radialement extérieur de la bande de roulement et le point le plus radialement intérieur du bourrelet, les cycles de flexion dans le flanc entraînent la rupture des éléments de renforcement métalliques de la portion de retournement d'armature de carcasse, située dans la zone de flexion du flanc, susceptible d'entraîner, dans la durée, une dégradation du pneumatique nécessitant son remplacement.

Pour un pneumatique à retournement d'armature de carcasse dit bas, c'est-à-dire pour lequel la hauteur d'armature de carcasse est au plus égale à 0.3 fois la distance radiale entre le point le plus radialement extérieur de la bande de roulement et le point le plus radialement intérieur du bourrelet, les cycles de flexion dans le bourrelet entraînent la fissuration des mélanges polymériques, situés au voisinage de l'extrémité de retournement d'armature de carcasse dans une zone de sollicitations mécaniques de flexion et de cisaillement élevées, susceptible d'entraîner, dans la durée, une dégradation du pneumatique nécessitant son remplacement. Ce phénomène de fissuration en extrémité de retournement d'armature de carcasse existe également, mais dans une moindre mesure, dans le cas d'un retournement haut d'armature de carcasse.

Dans le cas d'un pneumatique à retournement haut d'armature de carcasse, pour éviter le problème de rupture des éléments de renforcement métalliques de la portion de retournement d'armature de carcasse, située dans la zone de flexion du flanc, l'homme du métier a proposé de diminuer la hauteur du retournement d'armature de carcasse pour aboutir à un retournement bas d'armature de carcasse, qui est toutefois sensible à la fissuration des mélanges polymériques, situés au voisinage de l'extrémité de retournement d'armature de carcasse.

Dans le cas d'un pneumatique à retournement bas d'armature de carcasse, le document EP 0736400 décrit une solution pour résoudre le problème de fissuration des mélanges polymériques, situés au voisinage de l'extrémité de retournement d'armature de carcasse, consistant à enrober l'extrémité de retournement d'armature de carcasse par un matériau polymérique absorbant les déformations des mélanges polymériques présents dans cette zone. Les documents FR 2901178 et GB 2276357 proposent également des solutions à ce problème.

Les inventeurs se sont donnés pour objectif d'améliorer l'endurance des bourrelets d'un pneumatique radial pour véhicule lourd de type génie civil, en bloquant les fissures qui sont initiées dans la zone d'extrémité de retournement d'armature de carcasse et se propagent dans les matériaux polymériques environnants, entraînant dans la durée la dégradation du bourrelet.

Cet objectif a été atteint, selon l'invention, par un pneumatique pour véhicule lourd de type génie civil comprenant :
- une bande de roulement,
- deux flancs s'étendant radialement vers l'intérieur depuis les extrémités de la bande de roulement,
- deux bourrelets prolongeant les flancs radialement vers l'intérieur et comprenant chacun un noyau tringle,
- une armature de carcasse s'étendant entre les bourrelets et comprenant au moins une couche d'armature de carcasse constituée d'éléments de renforcement métalliques s'enroulant dans chaque bourrelet, de l'intérieur vers l'extérieur du pneumatique, autour du noyau tringle, pour former un retournement d'armature de carcasse s'étendant radialement vers l'extérieur jusqu'à une extrémité de retournement d'armature de carcasse, le retournement d'armature de carcasse comprenant deux faces respectivement axialement intérieure et axialement extérieure de retournement d'armature de carcasse
- un élément de bordage, constitué d'au moins deux couches de bordage constituées d'éléments de renforcement en matériau textile, étant en contact continu avec le retournement d'armature de carcasse entre un premier point de contact sur la face axialement intérieure de retournement d'armature de carcasse, correspondant à une première extrémité de l'élément de bordage, et un dernier point de contact sur la face axialement extérieure de retournement d'armature de carcasse.

Selon l'invention, il est avantageux d'avoir un élément de bordage, constitué d'au moins deux couches de bordage constituées d'éléments de renforcement en matériau textile, en contact continu avec le retournement d'armature de carcasse entre un premier point de contact sur la face axialement intérieure de retournement d'armature de carcasse, correspondant à une première extrémité de l'élément de bordage, et un dernier point de contact sur la face axialement extérieure de retournement d'armature de carcasse.

L'élément de bordage, constitué d'au moins deux couches de bordage constituées d'éléments de renforcement en matériau textile, réduit la vitesse de propagation des fissures initiées dans les matériaux polymériques en contact avec la zone d'extrémité de retournement d'armature de carcasse. L'initiation des fissures dans les matériaux polymériques en contact avec les éléments de renforcement métalliques résulte des défauts initiaux d'adhésion entre les extrémités des éléments de renforcement métalliques et les mélanges polymériques en contact. La propagation des fissures dépend des sollicitations dans les matériaux polymériques présents dans la zone d'extrémité de retournement d'armature de carcasse. L'élément de bordage, constitué d'au moins deux couches de bordage constituées d'éléments de renforcement en matériau textile, va d'une part réduire les contraintes et déformations dans le mélange d'enrobage en extrémité de retournement d'armature de carcasse, d'autre part bloquer la propagation des fissures dans les matériaux polymériques situés de part et d'autre du retournement d'armature de carcasse. La présence d'au moins deux couches de bordage superposées constitue un ensemble de barrières successives à la propagation des fissures.

De plus, un contact continu avec le retournement d'armature de carcasse entre un premier point de contact sur la face axialement intérieure de retournement d'armature de carcasse, correspondant à une première extrémité de l'élément de bordage, et un dernier point de contact, sur la face axialement extérieure de retournement d'armature de carcasse permet de garantir l'effet de ralentissement de la fissuration à la fois sur les portions de face axialement intérieure et de face axialement extérieure de retournement d'armature de carcasse.

Il est également avantageux que la distance entre le premier point de contact sur la face axialement intérieure de retournement d'armature de carcasse, correspondant à une première extrémité de l'élément de bordage, et l'extrémité de retournement d'armature de carcasse soit au moins égale à 5 fois le diamètre d'un élément de renforcement de la couche d'armature de carcasse. Cette distance minimale de contact garantit l'adhésion entre l'élément de bordage et la face axialement intérieure de retournement d'armature de carcasse. En deçà de cette distance minimale de contact, il existe un risque de décollement de l'élément de bordage, par un effet de rappel élastique, du fait de la proximité de l'extrémité de retournement d'armature de carcasse autour de laquelle l'élément de bordage est plié.

Il est encore avantageux d'avoir la distance entre le premier point de contact sur la face axialement intérieure de retournement d'armature de carcasse, correspondant à une première extrémité de l'élément de bordage, et l'extrémité de retournement d'armature de carcasse au plus égale à 10 fois le diamètre d'un élément de renforcement de la couche d'armature de carcasse. Cette distance maximale de contact garantit la couverture de portion de face axialement intérieure de retournement d'armature de carcasse sensible à la fissuration. Au-delà de cette distance maximale de contact, le risque de fissuration étant moindre, l'élément de bordage devient inutile vis-à-vis de la fissuration tout en entraînant un coût supplémentaire de matériau polymérique.

Un mode de réalisation avantageux de l'invention est d'avoir le dernier point de contact sur la face axialement extérieure de retournement d'armature de carcasse correspondant à une deuxième extrémité de l'élément de bordage. Cette caractéristique implique que la deuxième extrémité de l'élément est nécessairement en contact avec la face axialement extérieure de retournement d'armature de carcasse, ladite face étant, par convention, comprise entre le point le plus radialement intérieur de la couche d'armature de carcasse, radialement à l'intérieur du noyau tringle, et l'extrémité de retournement d'armature de carcasse. Dans ces conditions, l'élément de bordage n'est pas engagé sous le noyau tringle.

Il est également avantageux d'avoir la distance entre le dernier point de contact sur la face axialement extérieure de retournement d'armature de carcasse, correspondant à la deuxième extrémité de l'élément de bordage, et l'extrémité de retournement d'armature de carcasse est au moins égale à 10 fois le diamètre d'un élément de renforcement de la couche d'armature de carcasse. Comme pour le contact de l'élément de bordage avec la face axialement intérieure de retournement d'armature de carcasse, cette distance minimale de contact garantit l'adhésion entre l'élément de bordage et la face axialement extérieure de retournement d'armature de carcasse. En deçà de cette distance minimale de contact, il existe un risque de décollement de l'élément de bordage, par un effet de rappel élastique, du fait de la proximité de l'extrémité de retournement d'armature de carcasse autour de laquelle l'élément de bordage est plié.

Il est encore avantageux d'avoir la distance entre le dernier point de contact sur la face axialement extérieure de retournement d'armature de carcasse, correspondant à la deuxième extrémité de l'élément de bordage, et l'extrémité de retournement d'armature de carcasse est au plus égale à 20 fois le diamètre d'un élément de renforcement de la couche d'armature de carcasse. Cette distance maximale de contact garantit la couverture de portion de face axialement extérieure de retournement d'armature de carcasse sensible à la fissuration. Au-delà de cette distance maximale de contact, l'élément de bordage devient inutile vis-à-vis de la fissuration tout en entraînant un coût supplémentaire de matériau polymérique.

Un mode de réalisation avantageux est d'avoir l'épaisseur de l'élément de bordage au moins égale à 0.2 fois le diamètre d'un élément de renforcement de la couche d'armature de carcasse. C'est l'épaisseur minimale nécessaire pour garantir un bordage robuste, c'est-à-dire permettant d'éviter la pénétration des extrémités des éléments de renforcement métalliques du retournement d'armature de carcasse dans l'élément de bordage et par conséquent son endommagement par lesdites extrémités.

Un autre mode de réalisation avantageux est d'avoir l'épaisseur de l'élément de bordage au plus égale à 0.6 fois le diamètre d'un élément de renforcement de la couche d'armature de carcasse. Au-delà de cette épaisseur, le pliage de l'élément de bordage autour de l'extrémité de retournement d'armature de carcasse est difficile à réaliser et est susceptible de générer des défauts de fabrication pouvant entraîner la dégradation du pneumatique en utilisation.

Il est avantageux que l'élément de bordage soit constitué de deux couches de bordage, constituées d'éléments de renforcement en matériau textile, et que les éléments de renforcement d'une même couche de bordage, sensiblement parallèles entre eux, forment un angle non nul par rapport à la direction radiale et soient croisés par rapport aux éléments de renforcement de l'autre couche de bordage. Les deux couches de bordage dont les éléments de renforcement en matériau textile sont croisés d'une couche de bordage à l'autre constituent ainsi un tissu dont la trame assure un effet de triangulation limitant les déformations dans le mélange polymérique d'enrobage des éléments de renforcement métalliques sensiblement radiaux du retournement d'armature de carcasse: ce qui ralentit la propagation des fissures initiées sur le retournement d'armature de carcasse.

Les angles des éléments de renforcement respectivement des deux couches de bordage de l'élément de bordage sont avantageusement égaux entre eux, en valeur absolue, et au moins égaux à 45°, par rapport à la direction circonférentielle. L'égalité des angles permet de simplifier la fabrication puisque les angles respectifs des éléments de renforcement des couches de bordage sont identiques, au signe près. Les inventeurs ont montré qu'un angle d'au moins 45°, par rapport à la direction circonférentielle, permet d'assurer une triangulation optimale en extrémité de retournement d'armature de carcasse.

Les angles des éléments de renforcement respectivement des deux couches de bordage de l'élément de bordage sont également avantageusement au plus égaux à 80°, par rapport à la direction circonférentielle. Au-delà d'un angle de 80°, il n'y a plus d'effet de triangulation car les éléments de renforcement des couches de bordage sont alors sensiblement parallèles aux éléments de renforcement du retournement d'armature de carcasse dont l'angle par rapport à la direction circonférentielle est compris entre 85° et 95°.

Il est avantageux d'avoir les éléments de renforcement des deux couches de bordage de l'élément de bordage en matériau de type polyamide aliphatique, car ce type de matériau garantit une faible rigidité de flexion de l'élément de bordage permettant le pliage de l'élément de bordage autour de l'extrémité de retournement d'armature de carcasse et garantit une bonne tenue à la compression des éléments de renforcement.

Un mode de réalisation préféré est d'avoir la distance radiale entre l'extrémité de retournement d'armature de carcasse et le point radialement le plus intérieur du noyau tringle au plus égale à 0.3 fois la distance radiale entre le point le plus radialement extérieur de la bande de roulement du pneumatique et le point le plus radialement intérieur du bourrelet du pneumatique. C'est la caractéristique d'un retournement d'armature de carcasse dit bas, pour lequel la fissuration en extrémité de retournement d'armature de carcasse est particulièrement sensible et pour lequel l'élément de bordage apporte un avantage significatif.

Les caractéristiques de l'invention seront mieux comprises à l'aide de la description des figures annexées 1 à 3 :
- la figure 1 présente une vue en coupe dans un plan méridien du bourrelet d'un pneumatique pour véhicule lourd de type génie civil de l'état de la technique.
- la figure 2 présente une vue en coupe dans un plan méridien du bourrelet d'un pneumatique pour véhicule lourd de type génie civil, selon un premier mode de réalisation de l'invention.
- la figure 3 présente une vue en coupe dans un plan méridien du bourrelet d'un pneumatique pour véhicule lourd de type génie civil, selon un deuxième mode de réalisation de l'invention.

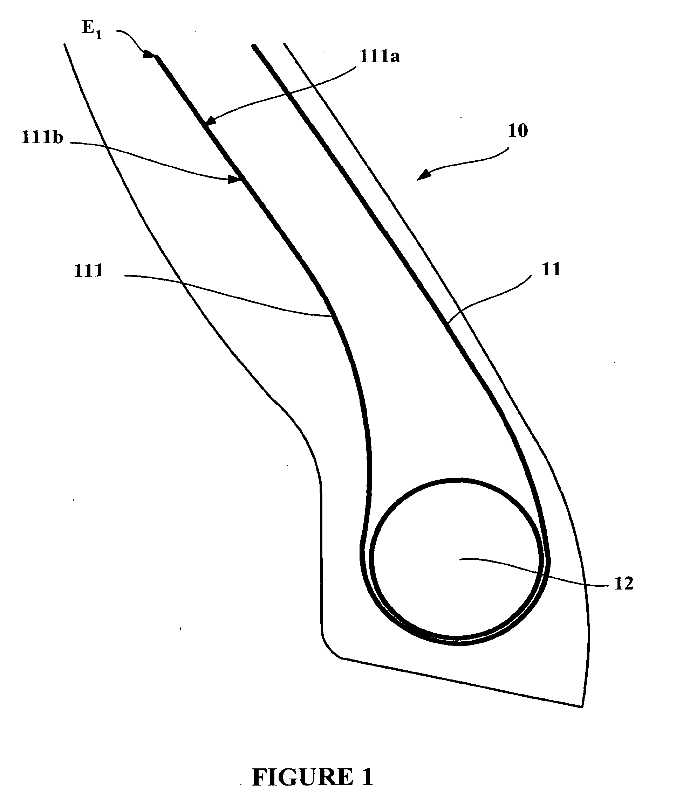

Les figures 1 à 3 ne sont pas représentées à l'échelle pour en faciliter la compréhension.

Sur la figure 1, est représenté un bourrelet de pneumatique 10 pour véhicule lourd de type génie civil de l'état de la technique, comprenant une armature de carcasse comprenant au moins une couche d'armature de carcasse 11 constituée d'éléments de renforcement métalliques s'enroulant, de l'intérieur vers l'extérieur du pneumatique, autour d'un noyau tringle 12, pour former un retournement d'armature de carcasse 111 s'étendant radialement vers l'extérieur jusqu'à une extrémité E₁ de retournement d'armature de carcasse, le retournement d'armature de carcasse comprenant deux faces respectivement axialement intérieure 111a et axialement extérieure 111b de retournement d'armature de carcasse.

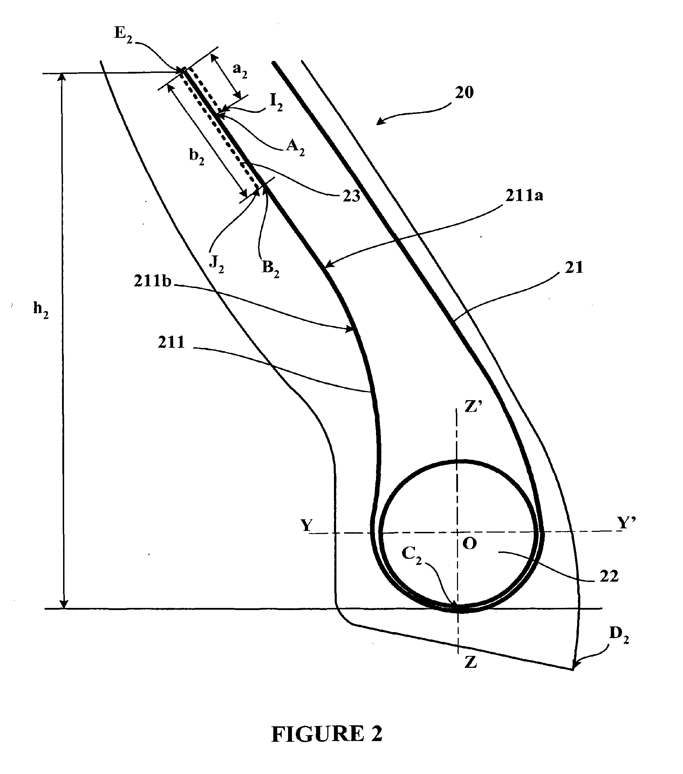

La figure 2, représentant un premier mode de réalisation de l'invention, présente un bourrelet de pneumatique 20 pour véhicule lourd de type génie civil, comprenant une armature de carcasse comprenant au moins une couche d'armature de carcasse 21 constituée d'éléments de renforcement métalliques s'enroulant, de l'intérieur vers l'extérieur du pneumatique, autour d'un noyau tringle 22, pour former un retournement d'armature de carcasse 211 s'étendant radialement vers l'extérieur jusqu'à une extrémité E₂ de retournement d'armature de carcasse, le retournement d'armature de carcasse comprenant deux faces respectivement axialement intérieure 211a et axialement extérieure 211b de retournement d'armature de carcasse.

Un élément de bordage 23, constitué d'au moins deux couches de bordage constituées d'éléments de renforcement en matériau textile, est en contact continu avec le retournement d'armature de carcasse 211, entre un premier point de contact A₂ sur la face axialement intérieure 211a de retournement d'armature de carcasse, correspondant à une première extrémité I₂ de l'élément de bordage, et un dernier point de contact B₂ sur la face axialement extérieure 211b de retournement d'armature de carcasse, correspondant à une deuxième extrémité J₂ de l'élément de bordage.

Les distances a₂ et b₂ sont les distances mesurées respectivement entre le premier point de contact A₂ sur la face axialement intérieure 211a de retournement d'armature de carcasse 211 et l'extrémité E₂ de retournement d'armature de carcasse, et entre le dernier point de contact B₂ sur la face axialement extérieure 211b de retournement d'armature de carcasse 211 et l'extrémité E₂ de retournement d'armature de carcasse.

La distance h₂ est la distance mesurée parallèlement à la direction radiale ZZ' entre l'extrémité E₂ de retournement d'armature de carcasse 211 et le point radialement le plus intérieur C₂ du noyau tringle 22. Cette distance peut être exprimée comme un ratio de la distance radiale entre le point le plus radialement extérieur de la bande de roulement du pneumatique, non représentée, et le point le plus radialement intérieur D₂ du bourrelet de pneumatique 20.

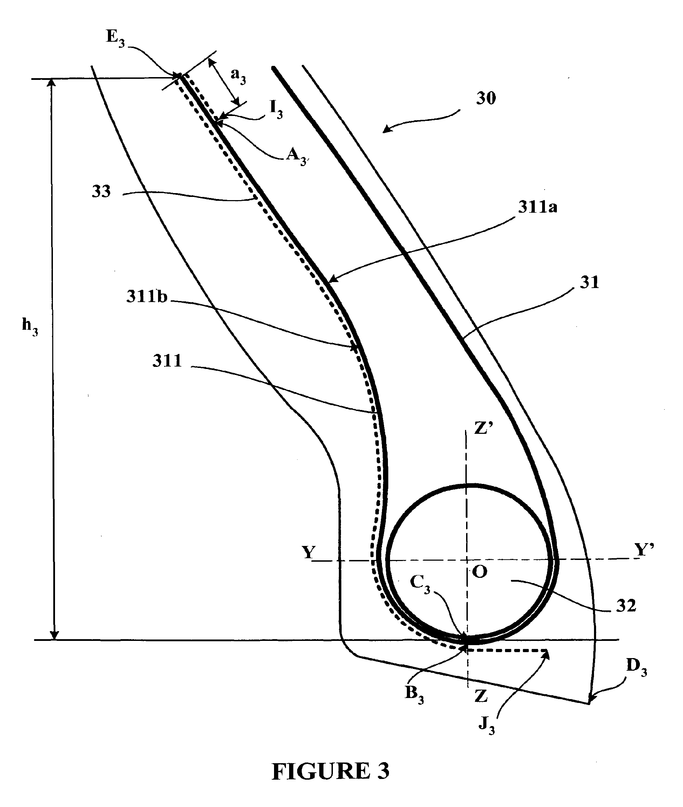

La figure 3, représentant un deuxième mode de réalisation de l'invention, présente un bourrelet de pneumatique 30 pour véhicule lourd de type génie civil, comprenant une armature de carcasse comprenant au moins une couche d'armature de carcasse 31 constituée d'éléments de renforcement métalliques s'enroulant, de l'intérieur vers l'extérieur du pneumatique, autour d'un noyau tringle 32, pour former un retournement d'armature de carcasse 311 s'étendant radialement vers l'extérieur jusqu'à une extrémité E₃ de retournement d'armature de carcasse, le retournement d'armature de carcasse comprenant deux faces respectivement axialement intérieure 311a et axialement extérieure 311b de retournement d'armature de carcasse.

Un élément de bordage 33, constitué d'au moins deux couches de bordage constituées d'éléments de renforcement en matériau textile, est en contact continu avec le retournement d'armature de carcasse 311, entre un premier point de contact A₃ sur la face axialement intérieure 311a de retournement d'armature de carcasse, correspondant à une première extrémité I₃ de l'élément de bordage, et un dernier point de contact B₃ sur la face axialement extérieure 311b de retournement d'armature de carcasse, mais ne correspondant pas à une deuxième extrémité J₃ de l'élément de bordage. Ce mode de réalisation apporte une amélioration vis-à-vis du risque de décohésion entre le mélange d'enrobage de la face axialement extérieure du retournement d'armature de carcasse et le mélange polymérique en contact. Dans ce mode de réalisation, une portion de l'élément de bordage 33, axialement intérieure à l'axe radial ZZ' passant par le centre du noyau tringle, n'est plus en contact avec la face axialement extérieure 311b de retournement d'armature de carcasse : l'élément de bordage 33 est dit engagé sous le noyau tringle 32.

La distances a₃ est la distance mesurée entre le premier point de contact A₃ sur la face axialement intérieure 311a de retournement d'armature de carcasse 311 et l'extrémité E₃.

La distance h₃ est la distance mesurée parallèlement à la direction radiale ZZ' entre l'extrémité E₃ de retournement d'armature de carcasse 311 et le point radialement le plus intérieur C₃ du noyau tringle 32. Cette distance peut être exprimée comme un ratio de la distance radiale entre le point le plus radialement extérieur de la bande de roulement du pneumatique, non représentée, et le point le plus radialement intérieur D₃ du bourrelet de pneumatique 30.

L'invention a été plus particulièrement étudiée dans le cas d'un pneumatique pour véhicule lourd de type dumper de dimension 59/80R63. Selon la norme ETRTO, les conditions nominales d'utilisation d'un tel pneumatique sont une pression de gonflage égale à 6 bars, une charge statique égale à 99 tonnes et une distance parcourue en une heure comprise entre 16 km et 32km.

Le pneumatique 59/80R63 a été conçu conformément au premier mode de réalisation, telle que représenté sur la figure 2.

Dans l'exemple étudié, la distance a₂ entre le premier point de contact A₂ sur la face axialement intérieure 211a de retournement d'armature de carcasse 211, correspondant à une première extrémité I₂ de l'élément de bordage 23 et l'extrémité E₂ de retournement d'armature de carcasse est égale à 35 mm, soit environ 8 fois le diamètre d'un élément de renforcement de la couche d'armature de carcasse égal à 4.5 mm.

La distance b₂ entre le dernier point de contact B₂ sur la face axialement extérieure 211b de retournement d'armature de carcasse 211, correspondant à une deuxième extrémité J₂ de l'élément de bordage 23 et l'extrémité E₂ de retournement d'armature de carcasse est égale à 70 mm, soit environ 16 fois le diamètre d'un élément de renforcement de la couche d'armature de carcasse égal à 4.5 mm.

L'élément de bordage 23 est constitué de deux couches de bordage d'épaisseur égale à 0.8 mm. L'épaisseur e de l'élément de bordage 23 est égale à 2 fois l'épaisseur d'une couche de bordage, soit 1.6mm, ce qui représente 0.35 fois le diamètre d'un élément de renforcement de la couche d'armature de carcasse égal à 4.5 mm.

Les angles respectifs des éléments de renforcement des couches de bordage sont égaux à +80° et -80° par rapport à la direction circonférentielle.

Le matériau constitutif des éléments de renforcement de l'élément de bordage est un nylon, c'est-à-dire un matériau de type polyamide aliphatique.

Enfin, la distance radiale h₂ entre l'extrémité E₂ de retournement d'armature de carcasse 211 et le point radialement le plus intérieur C₂ du noyau tringle 22 est égale à 270 mm, ce qui représente un ratio de 0.22 par rapport à la distance radiale entre le point le plus radialement extérieur de la bande de roulement du pneumatique et le point le plus radialement intérieur D₂ du bourrelet 20 du pneumatique, égale dans le cas étudiée à 1240 mm.

Les simulations de calculs par éléments finis, réalisées sur le pneumatique d'étude de dimension 59/80R63, montrent une réduction de 40% des déformations de cisaillement maximales dans le mélange d'enrobage du retournement d'armature de carcasse, entre les éléments de renforcement métalliques du retournement d'armature de carcasse, quand on passe du pneumatique de référence au pneumatique selon l'invention tel que représenté sur la figure 2.

L'invention ne doit pas être interprétée comme étant limitée à l'exemple illustré sur la figure 2 mais peut être étendue à d'autres variantes de réalisation, caractérisées, par exemple et de manière non exhaustive, un nombre de couches de bordage de l'élément de bordage supérieur à deux, des éléments de renforcement des couches de bordage de l'élément de bordage constituées d'un matériau différent d'une couche à l'autre.

## Revendications

1. Pneumatique pour véhicule lourd de type génie civil comprenant une bande de roulement, deux flancs s'étendant radialement vers l'intérieur depuis les extrémités de la bande de roulement, deux bourrelets (10, 20, 30) prolongeant les flancs radialement vers l'intérieur et comprenant chacun un noyau tringle (12, 22, 32), une armature de carcasse s'étendant entre les bourrelets et comprenant au moins une couche d'armature de carcasse (11, 21, 31) constituée d'éléments de renforcement métalliques s'enroulant dans chaque bourrelet, de l'intérieur vers l'extérieur du pneumatique, autour du noyau tringle, pour former un retournement d'armature de carcasse (111, 211, 311) s'étendant radialement vers l'extérieur jusqu'à une extrémité (E₁, E₂, E₃) de retournement d'armature de carcasse, le retournement d'armature de carcasse comprenant deux faces respectivement axialement intérieure (111a, 211a, 311a) et axialement extérieure (111b, 211b, 311b) de retournement d'armature de carcasse **caractérisé en ce qu'**un élément de bordage (23, 33), constitué d'au moins deux couches de bordage superposées constituées d'éléments de renforcement en matériau textile, est plié en contact continu autour de l'extrémité du retournement d'armature de carcasse (211, 311) entre un premier point de contact (A₂, A₃) sur la face axialement intérieure (211a, 311a) de retournement d'armature de carcasse, correspondant à une première extrémité (I₂, I₃) de l'élément de bordage, et un dernier point de contact (B₂, B₃) sur la face axialement extérieure (211b, 311b) de retournement d'armature de carcasse.

2. Pneumatique pour véhicule lourd de type génie civil selon la revendication 1, **caractérisé en ce que** la distance (a₂, a₃) entre le premier point de contact (A₂, A₃) sur la face axialement intérieure (211a, 311a) de retournement d'armature de carcasse (211, 311), correspondant à une première extrémité (I₂, I₃) de l'élément de bordage (23, 33), et l'extrémité (E₂, E₃) de retournement d'armature de carcasse est au moins égale à 5 fois le diamètre (d) d'un élément de renforcement de la couche d'armature de carcasse.

3. Pneumatique pour véhicule lourd de type génie civil selon l'une quelconque des revendications 1 ou 2, **caractérisé en ce que** la distance (a₂, a₃) entre le premier point de contact (A₂, A₃) sur la face axialement intérieure (211a, 311a) de retournement d'armature de carcasse (211, 311), correspondant à une première extrémité (I₂, I₃) de l'élément de bordage (23, 33), et l'extrémité (E₂, E₃) de retournement d'armature de carcasse est au plus égale à 10 fois le diamètre (d) d'un élément de renforcement de la couche d'armature de carcasse.

4. Pneumatique pour véhicule lourd de type génie civil selon l'une quelconque des revendications 1 à 3, **caractérisé en ce que** le dernier point de contact (B₂) sur la face axialement extérieure (211b) de retournement d'armature de carcasse (211) correspond à une deuxième extrémité (J₂) de l'élément de bordage (23).

5. Pneumatique pour véhicule lourd de type génie civil selon l'une quelconque des revendications 1 à 4, **caractérisé en ce que** la distance (b₂) entre le dernier point de contact (B₂) sur la face axialement extérieure (211b) de retournement d'armature de carcasse (211), correspondant à la deuxième extrémité (J₂) de l'élément de bordage (23), et l'extrémité (E₂) de retournement d'armature de carcasse est au moins égale à 10 fois le diamètre (d) d'un élément de renforcement de la couche d'armature de carcasse.

6. Pneumatique pour véhicule lourd de type génie civil selon l'une quelconque des revendications 1 à 5, **caractérisé en ce que** la distance (b₂) entre le dernier point de contact (B₂) sur la face axialement extérieure (211b) de retournement d'armature de carcasse (211), correspondant à la deuxième extrémité de (J₂) de l'élément de bordage (23), et l'extrémité (E₂) de retournement d'armature de carcasse est au plus égale à 20 fois le diamètre (d) d'un élément de renforcement de la couche d'armature de carcasse.

7. Pneumatique pour véhicule lourd de type génie civil selon l'une quelconque des revendications 1 à 6, **caractérisé en ce que** l'épaisseur (e) de l'élément de bordage (23, 33) est au moins égale à 0.2 fois le diamètre (d) d'un élément de renforcement de la couche d'armature de carcasse.

8. Pneumatique pour véhicule lourd de type génie civil selon l'une quelconque des revendications 1 à 7, **caractérisé en ce que** l'épaisseur (e) de l'élément de bordage (23, 33) est au plus égale à 0.6 fois le diamètre (d) d'un élément de renforcement de la couche d'armature de carcasse.

9. Pneumatique pour véhicule lourd de type génie civil selon l'une quelconque des revendications 1 à 8, **caractérisé en ce que** l'élément de bordage (23, 33) est constitué de deux couches de bordage constituées d'éléments de renforcement en matériau textile et **en ce que** les éléments de renforcement d'une même couche de bordage, sensiblement parallèles entre eux, forment un angle non nul par rapport à la direction radiale et sont croisés par rapport aux éléments de renforcement de l'autre couche de bordage.

10. Pneumatique pour véhicule lourd de type génie civil selon la revendication 9, **caractérisé en ce que** les angles des éléments de renforcement respectivement des deux couches de bordage de l'élément de bordage (23, 33) sont égaux entre eux, en valeur absolue, et au moins égaux à 45°, par rapport à la direction circonférentielle.

11. Pneumatique pour véhicule lourd de type génie civil selon la revendication 10, **caractérisé en ce que** les angles des éléments de renforcement respectivement des deux couches de bordage de l'élément de bordage (23, 33) sont au plus égaux à 80°, par rapport à la direction circonférentielle.

12. Pneumatique pour véhicule lourd de type génie civil selon l'une quelconque des revendications 1 à 11, **caractérisé en ce que** les éléments de renforcement des deux couches de bordage de l'élément de bordage (23, 33) sont en matériau de type polyamide aliphatique.

13. Pneumatique pour véhicule lourd de type génie civil selon l'une quelconque des revendications 1 à 12, **caractérisé en ce que** la distance radiale (h₂, h₃) entre l'extrémité (E₂, E₃) de retournement d'armature de carcasse (211, 311) et le point radialement le plus intérieur (C₂, C₃) du noyau tringle (22, 32) est au plus égale à 0.3 fois la distance radiale entre le point le plus radialement extérieur de la bande de roulement du pneumatique et le point le plus radialement intérieur (D₂, D₃) du bourrelet (20, 30) du pneumatique.

## Patentansprüche

1. Reifen für ein schweres Baufahrzeug, umfassend eine Lauffläche, zwei Seitenflächen, die sich radial nach innen von den Enden der Lauffläche erstrecken, zwei Wülste (10, 20, 30), die die Seitenflächen radial nach innen verlängern und jeweils einen Gestängekern (12, 22, 32) umfassen, wobei sich eine Gehäusebewehrung zwischen den Wülsten erstreckt und mindestens eine Gehäusebewehrungsschicht (11, 21, 31) umfasst, die von metallischen Verstärkungselementen gebildet ist, die sich in jeden Wulst von innen nach außen im Reifen um den Gestängekern wickeln, um eine Gehäusebewehrungsumkehr (111, 211, 311) zu bilden, die sich radial nach außen bis zu einem Ende (E₁, E₂, E₃) einer Gehäusebewehrungsumkehr erstreckt, wobei die Gehäusebewehrungsumkehr zwei axial innere (111a, 211a, 311a) bzw. axial äußere (111b, 211b, 311b) Gehäusebewehrungsumkehrflächen umfasst, **dadurch gekennzeichnet, dass** ein Umrandungselement (23, 33), das von mindestens zwei übereinander angeordneten Umrandungsschichten gebildet ist, die von Verstärkungselementen aus textilem Material gebildet sind, in kontinuierlichem Kontakt um das Ende der Gehäusebewehrungsumkehr (211, 311) zwischen einem ersten Kontaktpunkt (A₂, A₃) auf der axial inneren Seite (211a, 311a) der Gehäusebewehrungsumkehr, der einem ersten Ende (I₂, I₃) des Umrandungselements entspricht, und einem letzten Kontaktpunkt (B₂, B₃) auf der axial äußeren Seite (211b, 311b) der Gehäusebewehrungsumkehr umgelegt ist.

2. Reifen für ein schweres Baufahrzeug nach Anspruch 1, **dadurch gekennzeichnet, dass** der Abstand (a₂, a₃) zwischen dem ersten Kontaktpunkt (A₂, A₃) auf der axial inneren Seite (211a, 311a) der Gehäusebewehrungsumkehr (211, 311), der einem ersten Ende (I₂, I₃) des Umrandungselements (23, 33) entspricht, und dem Ende (E₂, E₃) der Gehäusebewehrungsumkehr mindestens gleich 5-mal dem Durchmesser (d) eines Verstärkungselements der Gehäusebewehrungsschicht ist.

3. Reifen für ein schweres Baufahrzeug nach Anspruch 1 oder 2, **dadurch gekennzeichnet, dass** der Abstand (a₂, a₃) zwischen dem ersten Kontaktpunkt (A₁, A₂) auf der axial inneren Seite (211a, 311a) der Gehäusebewehrungsumkehr (211, 311), der einem ersten Ende (I₂, I₃) des Umrandungselements (23, 33) entspricht, und dem Ende (E₂, E₃) der Gehäusebewehrungsumkehr höchstens gleich 10-mal dem Durchmesser (d) eines Verstärkungselements der Gehäusebewehrungsschicht ist.

4. Reifen für ein schweres Baufahrzeug nach einem der Ansprüche 1 bis 3, **dadurch gekennzeichnet, dass** der erste Kontaktpunkt (B₂) auf der axial äußeren Seite (211b) der Gehäusebewehrungsumkehr (211) einem zweiten Ende (J₂) des Umrandungselements (23) entspricht.

5. Reifen für ein schweres Baufahrzeug nach Anspruch 1 bis 4, **dadurch gekennzeichnet, dass** der Abstand (b₂) zwischen dem letzten Kontaktpunkt (B₂) auf der axial äußeren Seite (211b) der Gehäusebewehrungsumkehr (211), der dem zweiten Ende (J₂) des Umrandungselements (23) entspricht, und dem Ende (E₂) der Gehäusebewehrungsumkehr mindestens gleich 10-mal dem Durchmesser (d) eines Verstärkungselements der Gehäusebewehrungsschicht ist.

6. Reifen für ein schweres Baufahrzeug nach Anspruch 1 bis 5, **dadurch gekennzeichnet, dass** der Abstand (b₂) zwischen dem letzten Kontaktpunkt (B₂) auf der axial äußeren Seite (211b) der Gehäusebewehrungsumkehr (211), der dem zweiten Ende (J₂) des Umrandungselements (23) entspricht, und dem Ende (E₂) der Gehäusebewehrungsumkehr höchstens gleich 20-mal dem Durchmesser (d) eines Verstärkungselements der Gehäusebewehrungsschicht ist.

7. Reifen für ein schweres Baufahrzeug nach einem der Ansprüche 1 bis 6, **dadurch gekennzeichnet, dass** die Dicke (e) des Umrandungselements (23, 33) mindestens gleich 0,2-mal dem Durchmesser (d) eines Verstärkungselements der Gehäusebewehrungsschicht ist.

8. Reifen für ein schweres Baufahrzeug nach einem der Ansprüche 1 bis 7, **dadurch gekennzeichnet, dass** die Dicke (e) des Umrandungselements (23, 33) höchstens gleich 0,6-mal dem Durchmesser (d) eines Verstärkungselements der Gehäusebewehrungsschicht ist.

9. Reifen für ein schweres Baufahrzeug nach einem der Ansprüche 1 bis 8, **dadurch gekennzeichnet, dass** das Umrandungselement (23, 33) von zwei Umrandungsschichten gebildet ist, die von Verstärkungselementen aus textilem Material gebildet sind, und dass die Verstärkungselemente einer selben Umrandungsschicht, die im Wesentlichen zueinander parallel sind, einen Winkel ungleich Null in Bezug zur Radialrichtung bilden und in Bezug zu den Verstärkungselementen der anderen Umrandungsschicht gekreuzt sind.

10. Reifen für ein schweres Baufahrzeug nach Anspruch 9, **dadurch gekennzeichnet, dass** die Winkel der Verstärkungselemente jeweils der beiden Umrandungsschichten des Umrandungselements (23, 33) im Absolutwert zueinander gleich sind und in Bezug zur Umfangsrichtung mindestens gleich 45° sind.

11. Reifen für ein schweres Baufahrzeug nach Anspruch 10, **dadurch gekennzeichnet, dass** die Winkel der Verstärkungselemente jeweils der beiden Umrandungsschichten des Umrandungselements (23, 33) höchstens gleich 80° in Bezug zur Umfangsrichtung sind.

12. Reifen für ein schweres Baufahrzeug nach einem der Ansprüche 1 bis 11, **dadurch gekennzeichnet, dass** die Verstärkungselemente der beiden Umrandungsschichten des Umrandungselements (23, 33) aus einem Material vom Typ aliphatisches Polyamid sind.

13. Reifen für ein schweres Baufahrzeug nach einem der Ansprüche 1 bis 12, **dadurch gekennzeichnet, dass** der radiale Abstand (h₂, h₃) zwischen dem Ende (E₂, E₃) der Gehäusebewehrungsumkehr (211, 311) und dem radial innersten Punkt (C₂, C₃) des Gestängekerns (22, 32) höchstens gleich 0,3-mal dem radialen Abstand (d) zwischen dem radial äußersten Punkt der Lauffläche des Reifens und dem radial innersten Punkt (D₂, D₃) des Wulstes (20, 30) des Reifens ist.

## Claims

1. Tyre for a heavy vehicle of the civil engineering type comprising a tread, two sidewalls extending radially inwards from the ends of the tread, two beads (10, 20, 30) extending the sidewalls radially inwards and each comprising a bead wire core (12, 22, 32), a carcass reinforcement extending between the beads and comprising at least one carcass reinforcement layer (11, 21, 31) consisting of metal reinforcement elements wound in each bead, from the inside to the outside of the tyre, around the bead wire core, in order to form a carcass reinforcement upturn (111, 211, 311) extending radially outwards to a carcass reinforcement upturn end (E₁, E₂, E₃), the carcass reinforcement upturn comprising two respectively axially inner (111a, 211a, 311a) and axially outer (111b, 211b, 311b) faces of carcass reinforcement upturn, **characterized in that** a binding element (23, 33), consisting of at least two superposed binding layers consisting of reinforcement elements made of textile material, is folded in continuous contact around the end of the carcass reinforcement upturn (211, 311) between a first point of contact (A₂, A₃) on the axially inner face (211a, 311a) of carcass reinforcement upturn, corresponding to a first end (I₂, I₃) of the binding element, and a last point of contact (B₂, B₃) on the axially outer face (211b, 311b) of carcass reinforcement upturn.

2. Tyre for a heavy vehicle of the civil engineering type according to Claim 1, **characterized in that** the distance (a₂, a₃) between the first point of contact (A₂, A₃) on the axially inner face (211a, 311a) of carcass reinforcement upturn (211, 311), corresponding to a first end (I₂, I₃) of the binding element (23, 33), and the end (E₂, E₃) of carcass reinforcement upturn is at least equal to 5 times the diameter (d) of a reinforcement element of the carcass reinforcement layer.

3. Tyre for a heavy vehicle of the civil engineering type according to either one of Claims 1 and 2, **characterized in that** the distance (a₂, a₃) between the first point of contact (A₂, A₃) on the axially inner face (211a, 311a) of carcass reinforcement upturn (211, 311), corresponding to a first end (I₂, I₃) of the binding element (23, 33), and the end (E₂, E₃) of carcass reinforcement upturn is at most equal to 10 times the diameter (d) of a reinforcement element of the carcass reinforcement layer.

4. Tyre for a heavy vehicle of the civil engineering type according to any one of Claims 1 to 3, **characterized in that** the last point of contact (B₂) on the axially outer face (211b) of carcass reinforcement upturn (211) corresponds to a second end (J₂) of the binding element (23).

5. Tyre for a heavy vehicle of the civil engineering type according to any one of Claims 1 to 4, **characterized in that** the distance (b₂) between the last point of contact (B₂) on the axially outer face (211b) of carcass reinforcement upturn (211), corresponding to the second end (J₂) of the binding element (23), and the end (E₂) of carcass reinforcement upturn is at least equal to 10 times the diameter (d) of a reinforcement element of the carcass reinforcement layer.

6. Tyre for a heavy vehicle of the civil engineering type according to any one of Claims 1 to 5, **characterized in that** the distance (b₂) between the last point of contact (B₂) on the axially outer face (211b) of carcass reinforcement upturn (211), corresponding to the second end (J₂) of the binding element (23), and the end (E₂) of carcass reinforcement upturn is at most equal to 20 times the diameter (d) of a reinforcement element of the carcass reinforcement layer.

7. Tyre for a heavy vehicle of the civil engineering type according to any one of Claims 1 to 6, **characterized in that** the thickness (e) of the binding element (23, 33) is at least equal to 0.2 times the diameter (d) of a reinforcement element of the carcass reinforcement layer.

8. Tyre for a heavy vehicle of the civil engineering type according to any one of Claims 1 to 7, **characterized in that** the thickness (e) of the binding element (23, 33) is at most equal to 0.6 times the diameter (d) of a reinforcement element of the carcass reinforcement layer.

9. Tyre for a heavy vehicle of the civil engineering type according to any one of Claims 1 to 8, **characterized in that** the binding element (23, 33) consists of two binding layers consisting of reinforcement elements made of textile material and **in that** the reinforcement elements of one and the same binding layer, substantially parallel with one another, form a non-zero angle relative to the radial direction and are crossed relative to the reinforcement elements of the other binding layer.

10. Tyre for a heavy vehicle of the civil engineering type according to Claim 9, **characterized in that** the angles of the reinforcement elements respectively of the two binding layers of the binding element (23, 33) are equal to one another, in absolute value, and at least equal to 45°, relative to the circumferential direction.

11. Tyre for a heavy vehicle of the civil engineering type according to Claim 10, **characterized in that** the angles of the reinforcement elements respectively of the two binding layers of the binding element (23, 33) are at most equal to 80°, relative to the circumferential direction.

12. Tyre for a heavy vehicle of the civil engineering type according to any one of Claims 1 to 11, **characterized in that** the reinforcement elements of the two binding layers of the binding element (23, 33) are made of material of the aliphatic polyamide type.

13. Tyre for a heavy vehicle of the civil engineering type according to any one of Claims 1 to 12, **characterized in that** the radial distance (h₂, h₃) between the end (E₂, E₃) of carcass reinforcement upturn (211, 311) and the radially innermost point (C₂, C₃) of the bead wire core (22, 32) is at most equal to 0.3 times the radial distance between the radially outermost point of the tread of the tyre and the radially innermost point (D₂, D₃) of the bead (20, 30) of the tyre.
